# EUROPÄISCHE PATENTANMELDUNG

(11) **EP 4 819 272 A1**
(43) Veröffentlichungstag der Anmeldung: **07.10.2026**
(21) Anmeldenummer: 26166470.0
(22) Anmeldetag: 20.03.2026
(51) Int. Cl.: H01M 10/052, H01M 10/054, H01M 50/46, H01M 50/411, H01M 50/449

(54) **METALL-IONEN-BATTERIEZELLE SOWIE KRAFTFAHRZEUG MIT EINER SOLCHEN METALL-IONEN-BATTERIEZELLE**

(30) Priorität: 04.04.2025 DE 102025113377
(71) Anmelder: Volkswagen Aktiengesellschaft, 38440 Wolfsburg (DE)
(72) Erfinder: Wygasch, Johannes, 38440 Wolfsburg (DE)

(57) **Zusammenfassung**

Die Erfindung betrifft eine Metall-Ionen-Batteriezelle (8), insbesondere Li-Ionen-Batteriezelle. Diese umfasst eine Anode (10), eine Kathode (12) sowie einen flüssigen Elektrolyt mit einem Lösungsmittel, wobei die Anode (10) mit einem ersten Separator (14) zur Desolvatation von Metallionen vom Lösungsmittel beschichtet ist.

## Beschreibung

Die Erfindung betrifft eine Metall-Ionen-Batteriezelle, beispielsweise eine Li-lonen-Batteriezelle oder eine Mg-lonen-Batteriezelle oder eine Na-lonen-Batteriezelle, die eine Anode und eine Kathode aufweist. Des Weiteren betrifft die Erfindung eine Batterie mit einer solchen Batteriezelle sowie ein Kraftfahrzeug mit einer solchen Batteriezelle.

Ein elektrisch angetriebenes Kraftfahrzeug weist typischerweise eine Traktionsbatterie (Hochvoltbatterie, HV-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Eine solche Traktionsbatterie umfasst typischerweise mehrere Metall-lonen-Batteriezellen, beispielsweise Lithium-Ionen-Batteriezellen, zur Bereitstellung elektrischer Energie. Jede der Batteriezellen weist dabei zumindest eine Anode und eine Kathode auf, zwischen denen ein Separator angeordnet ist. Zudem ist in der Batteriezelle ein Elektrolyt für einen (Metall-) Ionentransport zwischen der Anode und der Kathode aufgenommen. Der Elektrolyt umfasst dabei zweckmäßig ein Leitsalz sowie ein organisches Lösungsmittel, in welchem das Leitsalz gelöst ist.

Bei der Interkalation eines Metall-Ions in die Anode kann es zu einem Abscheiden des Metalls an der Anoden-Oberfläche kommen. Beispielsweise kann sich im Falle einer Lithium-Ionen-Batteriezelle also metallisches Lithium abscheiden (sogenanntes Lithium-Plating). Nachteilig kann dies in Dendriten resultieren, welche den Separator der Batteriezelle beschädigen oder sogar durchdringen können.

Zusätzlich oder alternativ hierzu besteht die Gefahr, dass bei der Interkalation des Metall-Ions in die Anode auch eine Ko-Interkalation des Lösungsmittels des Elektrolyten in die Anode erfolgt.

Nachteilig resultiert eine derartige Ko-Interkalation in einer mechanischen Spannung in der Anode, was wiederum eine Alterung der Anode begünstigt.

Aus der DE 10 2022 201 736 A1 ist eine Batteriezelle mit einem Zellgehäuse bekannt, in dem ein Elektroden-/Separator-Stapel angeordnet ist. Der Elektroden-/Separator-Stapel weist zumindest einen Lagenverbund-Zuschnitt auf, in dem eine Separatorlage in einem Beschichtungsprozess beidseitig direkt mit jeweils einer Anodenaktivmateriallage und mit einer Kathodenaktivmateriallage beschichtet ist.

Die Lehre der DE 10 2011 114 613 A1 betrifft eine Anordnung für eine elektrochemische Zelle, die eine poröse, elektrisch isolierende Separator-Membran umfasst, die auf einer ihrer beiden Seiten mindestens eine erste Schicht aus einem positiven Aktivmaterial, aus dem während des Betriebs der elektrochemische Zelle Lithium-Ionen entfernbar ist, und/oder auf der anderen ihrer beiden Seiten mindestens eine zweite Schicht aus einem negativen Aktivmaterial aufweist, in das während des Betriebs der elektrochemischen Zelle Lithium-Ionen ein- oder anlagerbar sind.

Aus der DE 10 2013 215 732 A1 ist weiterhin eine Lithium-Ionen-Batterie bekannt, wobei im Inneren deren Zellgehäuses eine Anode, eine Kathode, ein zwischen Anode und Kathode angeordneter Separator und ein zwischen Anode und Kathode angeordneter Elektrolyt angeordnet sind. Zudem ist innerhalb des Zellgehäuses und in fluidischer Verbindung zu wenigstens einem von der Anode, der Kathode, dem Separator und dem Elektrolyt wenigstens ein Sauerstofffänger angeordnet.

Der Erfindung liegt die Aufgabe zugrunde, eine besonders geeignete Metall-Ionen-Batteriezelle anzugeben, bei welcher eine Ko-Interkalation von Lösungsmittel in die Anode, und/oder ein Abscheiden von Metall auf der Anode vermieden oder eine Gefahr dessen zumindest reduziert ist. Weiterhin soll eine Batterie sowie ein Kraftfahrzeug mit einer solchen Batteriezelle angegeben werden.

Bezüglich der Metall-Ionen-Batteriezelle wird die Aufgabe durch die Merkmale des Anspruchs 1 erfindungsgemäß gelöst. Hinsichtlich des Batterie wird die Aufgabe mit den Merkmalen des Anspruchs 9 und hinsichtlich des Kraftfahrzeug mit den Merkmalen des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit der Metall-Ionen-Batteriezelle sinngemäß auch für die Batterie und/oder für das Kraftfahrzeug, und umgekehrt.

Die hier und im Folgenden kurz auch als Batteriezelle oder als Zelle bezeichnete Metall-Ionen-Batteriezelle ist beispielsweise eine Magnesium-Ionen-Batteriezelle (Mg-lonen-Batteriezelle), eine Natrium-Ionen-Batteriezelle (Na-lonen-Batteriezelle) oder insbesondere eine Lithium-Ionen-Batteriezelle (Li-lonen-Batteriezelle). Allenfalls weist die Batteriezelle eine Anode, insbesondere mindestens eine Anode, und eine Kathode, insbesondere mindestens eine Kathode, auf. Weiterhin umfasst die Batteriezelle einen flüssigen Elektrolyten für den Transport der Metallionen. Zweckmäßig sind die Anode und die Kathode zumindest abschnittsweise nicht direkt in Kontakt mit dem flüssigen Elektrolyt.

Der Elektrolyt umfasst ein, insbesondere nicht wässriges und/oder organisches Lösungsmittel, in welchem die Metallionen (Metall-Ionen) gelöst sind und/oder lösbar sind. Als Lösungsmittel wird im Falle einer Li-lonen-Batteriezelle beispielsweise Ethylencarbonat (EC), Propylencarbonat (PC), Dimethylcarbonat (DMC), Methylencarbonat, oder eine Kombination aus diesen Stoffen verwendet.

Bei einem im Lösungsmittel gelösten Metallion ist dieses von einer Solvathülle aus Molekülen des Lösungsmittels umfasst. Die Anode ist mit einem ersten Separator (anodenseitiger Separator) beschichtet, welcher der Desolvatation der Metallionen vom Lösungsmittel, also dem Abstreifen der Solvathülle, dient. Der erste Separator ist also direkt in mechanischem Kontakt mit der Anode. Der erste Separator ist somit kein zur Anode separates Bauteil, sondern ist direkt mit der Anode gefügt. Auf diese Weise ist der erste Separator verliersicher mit der Anode verbunden und/oder ein Ausrichten des ersten Separators bezüglich der Anode in Zuge des Zusammenbaus der Batteriezelle kann entfallen und/oder wird nicht durchgeführt.

Die Anode umfasst zweckmäßig Anodenmaterial mit einem Binder, mit einem Aktivmaterial und mit einem Leitadditiv. Dieses Anodenmaterial ist zweckmäßig als eine Schicht auf ein Substrat, insbesondere eine Metallfolie, zweckmäßig eine Kupferfolie, aufgebracht. Als Aktivmaterial der Anode wird im Falle einer Li-lonen-Batterie beispielsweise Graphit verwendet. Besonders bevorzugt ist diese Schicht mit Anodenmaterial, also die Schicht mit Aktivmaterial, zumindest abschnittsweise, insbesondere zumindest die der Kathode zugewandte Seite, mit dem ersten Separator beschichtet.

Vorteilhaft ist anhand des ersten Separators und damit einhergehend mit der Desolvatation der Solvathülle vom Metallion eine Ko-Interkalation der Solvathülle in die Anode im Zuge der Interkalation des Metallions in die Anode vermieden oder eine Gefahr dessen zumindest reduziert.

Weiterhin ist aufgrund des ersten Separators eine vergleichsweise hohe Metall-Ionen-Konzentration, beispielsweise Li-lonen-Konzentration an der Oberfläche der Anode vermieden, so dass ein Abscheiden des Metalls, insbesondere von metallischen Lithium (Li-Plating) an der Anode vermieden ist.

Zudem ist im Vergleich zu einer zur Anode separatem Separator aufgrund der Beschichtung des ersten Separators auf die Anode die Bildung von Hohlräumen zwischen der Anode und dem ersten Separator vermieden. Bei der Beschichtung dringen vielmehr Teile des ersten Separator in Oberflächenvertiefungen der Anode ein, so dass ein vergleichsweise guter Halt der Beschichtung an der Anode realisiert ist.

Der erste Separator ist bevorzugt zur chemischen Desolvatation des Metallions vorgesehen und eingerichtet. Hierzu umfasst der erste Separator Liganden, welche koordinative Bindungen mit den Metall-Ionen ausbilden und/oder ausbilden können. Alternativ hierzu ist der erste Separator aus derartigen Liganden gebildet, mit anderen Worten besteht der Separator aus diesen Liganden.

Gemäß einer geeigneten Ausgestaltung umfasst der erste Separator Kronenether zur chemischen Desolvatation (chemisch bedingten Desolvatation) des Metallions oder besteht aus einem solchen Kronenether. Beispielsweise wird als Kronenether 12-Krone-4, 15-Krone-5 oder 18-Krone-6 verwendet. Dabei eignet sich 12-Krone-4 besonders für eine Lithium-Ionen-Batteriezelle und/oder für ein Mg-lonen-Batteriezelle. Weiterhin eignet sich 15-Krone-5 besonders für eine Lithium-Ionen-Batteriezelle, für eine Natrium-Ionen-Batteriezelle, und/oder für ein Mg-lonen-Batteriezelle. Weiterhin eignet sich 18-Krone-6 als Kronenether besonders für eine Natrium-lonen-Batteriezelle.

Beispielsweise beträgt dabei eine Schichtdicke des ersten Separators zwischen 10 nm und 70 nm, insbesondere zwischen 10 nm und 50 nm, vorzugsweise 25 nm und 45 nm.

Unter der Schichtdicke ist dabei die räumliche Ausdehnung der jeweiligen Schicht (Lage) in Stapelrichtung, also in oder entgegen einer Richtung von der Anode zur Kathode zu verstehen.

Alternativ zu Kronenether für die chemische Desolvatation des Metallions werden als Liganden für Lithium-Ionen und/oder für Natrium-Ionen Ehylendiamin oder für Magnesium-Ionen Ethylendiamintetraacetat (EDTA), Citrat oder Oxalat verwendet.

Optional werden diese Liganden in Polymere eingebunden. Hierzu wird beispielsweise Citrat copolymerisiert oder die Carboxylgruppe durch Esterbildung oder Amidierung mit Aminen oder Epoxidgruppen des Polymers reagiert. Weiter beispielsweise werden Carboxylgruppen von Oxalat mit Aminen, Epoxidgruppen oder Isocyanaten des Polymers reagiert. Weiter beispielsweise wird eine Carboxylgruppe von Ethylendiamintetraacetat mit einer Epoxyidgruppe oder mit einem Isocyanat des Polymers reagiert. Weiter beispielsweise werden Kronenether zunächst derart chemisch modifiziert, dass eine reaktive Gruppe wie beispielsweise eine Vinylgruppe, gebildet wird, welche in die Polymerisation mit Monomeren des Polymers einbezogen wird. Weiter beispielsweise wird Ehylendiamin in Acrylat- oder Methacrylat-Monomere integriert, welche dann durch radikalische Polymerisation zu Polymeren verbunden werden.

Gemäß einer bevorzugten Weiterbildung ist der erste Separator mehrschichtig, also zumindest zweischichtig. Mit anderen Worten ist oder umfasst der erste Separator bevorzugt mindestens zwei Schichten. Eine erste Schicht des ersten Separators ist oder umfasst dabei einen Haftvermittler für eine auf der ersten Schicht angeordnete zweite Schicht. Zweckmäßig ist der Haftvermittler hierbei elektrisch leitend und/oder Ionen-leitfähig für die Metallionen.

Die erste Schicht ist dabei direkt auf der Anode angeordnet, insbesondere in mechanischem Kontakt mit dieser. Die zweite Schicht ist direkt auf der ersten Schicht angeordnet, also in mechanischem Kontakt mit dieser. Zusammenfassend ist die erste Schicht also zwischen der Anode und der zweiten Schicht angeordnet.

Die erste Schicht umfasst beispielsweise Graphenoxid oder besteht aus Graphenoxid. Die zweite Schicht umfasst beispielsweise die oben dargestellten Kronenether oder ist aus diesen gebildet. Beispielsweise beträgt eine Schichtdicke der ersten Schicht zwischen 5 nm und 20 nm, bevorzugt zwischen 10 nm und 20 nm. Beispielsweise beträgt eine Schichtdicke der zweiten Schicht zwischen 10 nm und 50 nm, bevorzugt zwischen 25 nm und 45 nm. Auf diese Weise ist die jeweilige Schicht vergleichsweise dünn, somit materialsparend ausgebildet, wobei eine chemische Desolvatation vergleichsweise zuverlässig erfolgt.

Bevorzugt wird zum Beschichten der Anode mit der ersten Schicht ein Sprühverfahren verwendet. Zweckmäßig wird zum Beschichten, also Auftragen der ersten Schicht, Graphenoxid in einem Lösungsmittel, insbesondere Wasser oder eine Wasser-Ethanol-Mischung oder Dimethylsulfoxid, gelöst, wobei zweckmäßig eine Konzentration von Graphenoxid zwischen 0,01 mg/ml und 5 mg/ml, vorzugsweise zwischen 0,01 mg/ml und 0,8 mg/l beträgt. Diese Lösung wird anhand einer (ersten) Auftrageinrichtung mit einer Düse aufgetragen. Beispielsweise wird hierzu ein Airbrush-System oder eines Ultraschall-Vernebler verwendet. Beispielsweise beträgt dabei ein Sprühdruck zwischen 0,8 bar und 3,0 bar, insbesondere zwischen 1,0 bar und 1,5 bar. Eine Sprührate beträgt dabei geeigneter Weise zwischen 1 ml/min und 5 ml/min, vorzugsweise zwischen 3,5 ml/min und 5 ml/min und/oder eine Sprühergeschwindigkeit, also die Geschwindigkeit der Düse relativ zum Substrat (hier die Anode), auf welches die Lösung aufgetragen wird, zwischen 8 m/min und 70 m/min, vorzugsweise zwischen 35 m/min und 70 m/min. Der Abstand der Düse zum Substrat beträgt geeigneter Weise zwischen 10 cm und 30 cm, insbesondere zwischen 20 cm und 25 cm. Geeigneter Weise beträgt eine Sprühtemperatur zwischen 20°C und 50°C, vorzugsweise zwischen 35°C und 50 °C. Die Anode mit der aufgetragenen Lösung wird geeigneter Weise anschließend bei einer Temperatur zwischen 50°C und 120°C, vorzugsweise zwischen 70°C und 100°C getrocknet.

Bevorzugt wird zum Beschichten der mit der ersten Schicht versehenen Anode mit der zweiten Schicht ebenfalls ein Sprühverfahren verwendet. Zweckmäßig werden zum Auftragen der zweiten Schicht Kronenether in einem Lösungsmittel, beispielsweise Aceton, Methanol und/oder Tetrahydrofuran gelöst, wobei zweckmäßig eine Stoffmengenkonzentration der Kronenether zwischen 0,01 M (0,01 mol/l) bis 0,5 M (0,5 mol/I), vorzugsweise zwischen 0,01 M bis 0,07 M beträgt. Diese Lösung wird anhand einer (zweiten) Auftrageinrichtung mit einer Düse aufgetragen. Beispielsweise wird hierzu in analoger Weise ein Airbrush-System oder eines Ultraschall-Vernebler verwendet. Dabei beträgt beispielsweise ein Sprühdruck zwischen 1,5 bar und 3,0 bar, insbesondere zwischen 2,5 bar und 3,0 bar. Geeigneter Weise beträgt ein Düsendurchmesser der Düsenöffnung der Düse zum Auftragen der Lösung zwischen 0,2 mm und 0,5 mm, vorzugsweise zwischen 0,2 mm und 0,3 mm und/oder ein Abstand der Düse zum Substrat, auf das die Lösung aufgetragen werden soll, zwischen 10 cm und 30 cm, vorzugsweise zwischen 20 cm und 25 cm. Geeigneter Weise beträgt eine Sprühtemperatur, also eine Temperatur der Lösung beim Sprühen, zwischen 25°C und 45°C, vorzugsweise zwischen 30°C und 40°C. Geeigneter Weise beträgt die Schichtdicke der aufgetragenen Lösung zwischen 1 µm und 10 µm. Geeigneter Weise beträgt eine Sprühergeschwindigkeit, also die Geschwindigkeit der Düse relativ zum Substrat (hier die Anode oder die Anode mit der ersten Schicht), auf welches die Lösung aufgetragen werden soll, zwischen 8 m/min und 70 m/min, vorzugsweise zwischen 35 m/min und 70 m/min. Das Substrat mit der aufgetragenen Lösung wird geeigneter Weise anschließend anhand eines Durchlaufofens getrocknet. Beispielsweise beträgt hierbei eine Durchlaufgeschwindigkeit zwischen 2 m/min und 70 m/min, vorzugsweise zwischen 35 m/min und 70 m/min, und/oder eine Länge des Durchlaufofens zwischen 30 m und 70 m, vorzugsweise zwischen 50 m und 70 m. Beispielsweise beträgt eine Trocknungstemperatur zwischen 40°C und 60°C, vorzugsweise zwischen 50°C und 60 °C und/oder eine Temperatur für eine Endtrocknung zwischen 80°C und 105 °C, vorzugsweise zwischen 90°C und 105 °C.

Gemäß einer besonders geeigneten Weiterbildung weist der erste Separator eine (erste) subnanoporöse Membran mit einer durchschnittlichen Porengröße zwischen 50 pm und 700 pm auf oder ist eine solche subnanoporöse Membran. Bevorzugt ist diese subnanoporöse Membran als eine dritte Schicht direkt auf der Schicht mit und/oder aus Kronenether, insbesondere auf der zweiten Schicht, angeordnet. Die subnanoporöse Membran ist also in mechanischem Kontakt mit dieser. Bevorzugt ist also die zweite Schicht mit der dritten Schicht beschichtet. Alternativ hierzu umfasst der erste Separator lediglich diese subnanoporöse Membran. Die (erste) subnanoporöse Membran dient dabei einer sterisch bedingten Desolvatation von Metallionen.

Bevorzugt beträgt dabei die durchschnittlichen Porengröße zwischen 80 pm und 500 pm, insbesondere zwischen 100 pm und 250 pm für eine Li-lonen-Batteriezelle, zwischen 110 pm und 600 pm, insbesondere zwischen 120 pm und 300 pm für eine Na-lonen-Batteriezelle und/oder zwischen 75 pm und 500 pm, insbesondere zwischen 90 pm und 220 pm für eine Mg-Ionen-Batteriezelle.

Beispielsweise beträgt eine Porosität der ersten subnanoporösen Membran zwischen 35% und 70%, insbesondere zwischen 45% und 65%.

Beispielsweise beträgt eine Schichtdicke der ersten subnanoporösen Membran zwischen 20 nm bis 200 nm, vorzugsweise 30 nm bis 100 nm.

Geeigneter Weise besteht die subnanoporöse Membran aus Polyethylenglykol oder umfasst Polyethylenglykol.

Zur Herstellung der subnanoporöse Membran wird beispielsweise ein Phasentrennungsverfahren, insbesondere Phase Inversions-Verfahren, verwendet. Hierbei wird zunächst Polyethylenglykol (PEG) in einem Lösungsmittel, insbesondere Wasser, Ethylalkohol oder Dimethylsulfoxid gelöst, wobei zweckmäßig ein Massenanteil von Polyethylenglykol zwischen 1 Gew.-% und 20 Gew.-%, vorzugsweise zwischen 1 Gew.-% und 4 Gew.-% beträgt. Zweckmäßig erfolgt anschließend eine Beschichtung eines Substrats, beispielsweise der Anode oder der mit der ersten und/oder der zweiten Schicht beschichteten Anode, durch Spin-Coating (Rotationsbeschichtung), insbesondere mit einer Umdrehungszahl zwischen 1000 Umdrehungen/min und 8000 Umdrehungen/min, vorzugsweise zwischen 7000 Umdrehungen/min und
8000 Umdrehungen/min, mit dieser Lösung. Zweckmäßig erfolgt anschließend eine Koagulation von Polyethylenglykol durch eintauchen in ein Koagulationsbad, dessen Temperatur geeigneter Weise zwischen 10°C und 25°C, vorzugsweise zwischen 22°C und 25°C, beträgt. Geeigneter Weise beträgt eine Dauer des Bades zwischen 1 min und 30 min, vorzugsweise zwischen 1 min und 3 min. Als Koagulationsflüssigkeit wird dabei beispielsweise Phosphorsäure, eine organische Säure wie beispielsweise Zitronensäure, eine Fluorid-haltige Lösung oder eine starke Basenlösung verwendet.

Zweckmäßig erfolgt anschließend eine Trocknung bei einer Trocknungstemperatur zwischen 30°C und 60°C, vorzugsweise zwischen 40°C und 45°C.

Alternativ wird die subnanoporöse Membran durch Elektrospinnen (Electrospinning) hergestellt. Hierzu wird zunächst Polyethylenglykol (PEG) in einem Lösungsmittel, insbesondere Ethanol, Dimethylformamid (DMF) oder Dimethylsulfoxid gelöst, wobei zweckmäßig ein Massenanteil von Polyethylenglykol zwischen 2 Gew.-% und 15 Gew.-%, vorzugsweise zwischen 2 Gew.-% und 8 Gew.-% beträgt.

Anschließend erfolgt die Bildung der subnanoporösen Membran durch Elektrospinnen aus dieser Lösung. Hierbei beträgt zweckmäßig eine Spannung zwischen einer Elektrode, von der die Lösung abgezogen wird, und dem Substrat (Gegenelektrode, Sammelplatte), auf welchem die abgezogene Lösung gesammelt wird, zwischen 10 kV und 35 kV, vorzugsweise zwischen 28 kV und 35 kV. Beispielsweise beträgt der Abstand der Elektrode zum Substrat, zwischen 8 cm und 25 cm, vorzugsweise zwischen 18 cm und 25 cm, und/oder eine Flussrate der Lösung zwischen 0,2 ml/h und 2 ml/h, vorzugsweise zwischen 0,2 ml/h und 0,5 ml/h.

Zweckmäßig beträgt die relative Luftfeuchtigkeit der Umgebung zwischen 40 % und 60 %, vorzugsweise zwischen 45 % und 58 %, und/oder die Temperatur der Umgebung zwischen 20°C und 30°C, vorzugsweise zwischen 25°C und 30 °C.

Bevorzugt wird das Substrat beim Elektrospinnen mit einer Rotationsgeschwindigkeit zwischen 200 Umdrehungen/min und 2000 Umdrehungen/min, vorzugsweise zwischen 500 Umdrehungen/min und 1500 Umdrehungen/min, gedreht.

Zweckmäßig erfolgt anschließend ein Trockenvorgang des derart beschichteten Substrats in einem Ofen unter Vakuum, wobei die Temperatur des beschichteten Substrats vorzugsweise auf einen Wert zwischen 40°C und 60°C, vorzugsweise zwischen 45°C und 52 °C eingestellt wird.

Optional werden Additive verwendet, um die Porengröße zu steuern. Diese werden zweckmäßig der Lösung für das Elektrospinnen oder der Lösung für die Phaseninversion hinzugegeben. Beispielsweise werden Tenside wie beispielsweise Pluronic F-127 oder Tween 80 verwendet, welche die Oberflächenspannung reduzieren und somit die Porengröße beeinflussen. Zusätzlich oder alternativ hierzu werden Salze wie beispielsweise NaCl oder CaCl₂ verwendet, welcher die Polymerisationseigenschaften des Polyethylenglykol und somit die Porengröße beeinflussen.

Beispielsweise wird die subnanoporöse Membran direkt auf der Anode oder auf der zweiten Schicht, beispielsweise durch das Elektrospinnen, hergestellt. Zweckmäßig und alternativ hierzu wird die subnanoporöse Membran zunächst als separates Teil auf einem zur Anode separaten Substrat hergestellt, anschließend die subnanoporöse Membran vom Substrat getrennt und auf die Anode oder auf die zweite Schicht aufgelegt. Anschließend wird die subnanoporöse Membran mit einer Walze, insbesondere mit einer Linienlast zwischen 10 kg/mm und 200 kg/mm, insbesondere zwischen100 kg/mm und 200 kg/mm, gegen die Anode oder die mit der ersten und der zweiten Schicht beschichtete Anode gedrückt. Auf diese Weise wird die subnanoporöse Membran in Vertiefungen und/oder Poren der Anode oder der zweiten Schicht eingedrückt, so dass diese vergleichsweise zuverlässig miteinander gefügt sind und/oder so dass Hohlräume zwischen der subnanoporösen Membran und der Anode bzw. der zweiten Schicht vermieden oder zumindest reduziert sind.

Gemäß einer bevorzugten Weiterbildung der Metall-Ionen-Batteriezelle ist die Kathode mit einem sauerstofffangenden zweiten Separator (kathodenseitiger Separator) beschichtet. Die Kathode umfasst zweckmäßig Kathodenmaterial mit einem Binder, mit einem Aktivmaterial und mit einem Leitadditiv. Dieses Kathodenmaterial ist zweckmäßig als eine Schicht auf ein Substrat, insbesondere eine Metallfolie, zweckmäßig eine Aluminiumfolie, aufgebracht. Als Aktivmaterial der Kathode wird für eine Lithium-Ionen-Batteriezelle beispielsweise Lithium-Nickel-Mangan-Oxid (NMC) verwendet. Besonders bevorzugt ist diese Schicht mit Kathodenmaterial, also die Schicht mit Aktivmaterial, zumindest abschnittsweise, insbesondere zumindest deren der Anode zugewandte Seite, mit dem zweiten Separator beschichtet. Der zweite Separator ist also aus sauerstofffangendem Material gebildet oder weist ein solches auf.

Der zweite Separator ist also direkt in mechanischem Kontakt mit der Kathode. Der zweite Separator ist somit kein zur Kathode separates Bauteil, sondern ist direkt mit der Kathode gefügt. Auf diese Weise ist der zweite Separator verliersicher mit der Kathode verbunden und/oder ein Ausrichten des zweiten Separators zur Kathode in Zuge des Zusammenbaus der Batteriezelle kann entfallen und/oder entfällt.

Bevorzugt ist oder umfasst der zweite Separator ein Polymer mit einer sauerstofffangenden funktionellen Gruppe. Geeigneter Weise ist die sauerstofffange funktionelle Gruppe eine Hydroxygruppe, eine Aldehydgruppe, eine Aminogruppe oder eine Thiolgruppe. Beispielsweise wird als ein solches Polymer Polyvinylalkohol (PVA), Polyacrylamid (PAM), Polyvinylthiol (PVT), Polyvinylacetaldehyd (PVAld), Poly-3,4-ethylendioxythiophen (PEDOT) und/oder und Poly(styrolsulfonsäure) (PSS) verwendet.

Beispielsweise ist der zweite Separator ein Polymerblend mit dem Polymer, das die sauerstofffangende funktionelle Gruppe aufweist. Geeigneter Weise weist der (Polymer-)Blend die elektrisch leitfähigen Polymere Poly-3,4-ethylendioxythiophen (PEDOT) und Poly(styrolsulfonsäure) (PSS) auf oder ist aus diesen gebildet.

Alternativ hierzu ist oder umfasst der zweite Separator ein Copolymer mit einer der sauerstofffangenden funktionellen Gruppen.

Zweckmäßig ist der zweite Separator porös, insbesondere mikroporös. Geeigneter Weise beträgt dabei eine durchschnittliche Porengröße zwischen 0,05 µm und 5 µm, vorzugsweise zwischen 0,1 µm und 1,0 µm und/oder eine Porosität zwischen 20 % und 80 %, vorzugsweise zwischen 30 % und 65 %.

Geeigneter Weise beträgt eine Schichtdicke des zweiten Separators zwischen 10 nm und 50nm.

Die Herstellung des zweiten Separators erfolgt beispielsweise anhand einer Sprühbeschichtung, beispielsweise der Kathode, insbesondere deren Kathodenmaterial oder - wie weiter unten dargestellt wird - einer zweiten subnanoporösen Membran. Beispielsweise wird hierzu eine Ultraschall-Sprühdüse oder eine elektrostatische Sprühdüse verwendet. Das Polymer oder der Polymerblend, beispielsweise ein Polymerblend aus Poly-3,4-ethylendioxythiophen (PEDOT) und Poly(styrolsulfonsäure) (PSS), wird zunächst in einem Lösungsmittel gelöst, wobei zweckmäßig Wasser als Lösungsmittel verwendet wird. Optional können Additive wir beispielsweise Ethanol, Isopropanol, Dimethylsulfoxid und/oder Glycerin zugegeben, um eine gewünschte Viskosität und/oder Sprühbarkeit der Lösung einzustellen. Zweckmäßig beträgt ein Massenanteil des Polymerblends zwischen 0,5 Gew.-% und 3,0 Gew.-%, vorzugsweise zwischen 0,5 Gew.-% und 1,0 Gew.-%. Eine für das Sprühen der Lösung verwendete Düse weist geeigneter Weise eine Düsenöffnung zwischen 0,1 mm und 1,0 mm, bevorzugt zwischen 0,1 mm und 0,4 mm und/oder ein Abstand zwischen der Düse und dem Substrat, auf welchem die Lösung aufgesprüht wird, beträgt zwischen 10 cm und 50 cm, bevorzugt zwischen 35 cm und 50 cm. Geeigneter Weise wird ein Sprühdruck zwischen 0,3 bar und 3,0 bar, vorzugsweise zwischen 0,3 bar und 0,6 bar verwendet. Anschließend an das Aufsprühen der Lösung erfolgt eine Trocknung des besprühten Substrats, zweckmäßig bei einer Temperatur zwischen 45°C und 100°C, vorzugsweise zwischen 45°C und 60°C, und/oder für eine Trocknungsdauer zwischen 10 min und 60 min, vorzugsweise zwischen 45 min und 60 min.

Vorteilhaft ist aufgrund der sauerstofffangenden Eigenschaft des zweiten Separators eine Oxidation des Elektrolyten mit Sauerstoff vermieden, der aus der Kathode, insbesondere bei Ni-reichen NMC-Materialien und/oder bei sicherheitskritischen, hohen Temperaturen wie beispielsweise bei einem sogenannten Thermal Runaway, freigesetzt wird. So kann der aus der Kathode freigesetzte Sauerstoff an den zweiten Separator, insbesondere an einer dessen sauerstofffangenden funktionellen Gruppen gebunden werden und/oder wird auch gebunden. Folglich ist eine Oxidation des Lösungsmittels verhindert. Zudem ist der Transfer des Sauerstoffs zur Anode, die vergleichsweise leicht brennbar ist, verhindert und damit einhergehend eine Brandgefahr reduziert.

Gemäß einer geeigneten Ausgestaltung ist der zweite Separator mit einer, insbesondere aus Polyethylenglykol bestehenden oder Polyethylenglykol aufweisenden, zweiten subnanoporösen Membran mit einer durchschnittlichen Porengröße zwischen 50 pm und 700 pm beschichtet ist. Die zweite subnanoporöse dient dabei einer sterisch bedingten Desolvatation von Metallionen.

Insbesondere beträgt die Schichtdicke der zweiten subnanoporöse Membran 20 nm bis 200 nm, vorzugsweise 30 nm bis 100 nm und/oder deren Porosität zwischen 35% und 70%, insbesondere zwischen 45% und 65%.

Bevorzugt beträgt dabei die durchschnittlichen Porengröße zwischen 80 pm und 500 pm, insbesondere zwischen 100 pm und 250 pm für eine Li-lonen-Batteriezelle, zwischen 110 pm und 600 pm, insbesondere zwischen 120 pm und 300 pm für eine Na-lonen-Batteriezelle und/oder zwischen 75 pm und 500 pm, insbesondere zwischen 90 pm und 220 pm für eine Mg-Ionen-Batteriezelle.

Die Herstellung der zweiten subnanoporösen Membran erfolgt zweckmäßig in analoger Weise zur Herstellung der ersten subnanoporösen Membran. Beispielsweise wird die zweite subnanoporöse Membran also anhand eines Phasentrennungsverfahrens, insbesondere Phase Inversions-Verfahren, oder durch Elektrospinnen hergestellt.

Besonders bevorzugt wird die zweite subnanoporöse Membran dabei zunächst als ein zur Kathode und/oder zum zweiten Separator separates Teil hergestellt.

Beispielsweise wird die zweite subnanoporöse Membran anschließend mit dem zweiten Separator beschichtet. Hierzu wird die zweite subnanoporöse Membran beispielsweise anhand der oben dargestellten Weise zur Herstellung des zweiten Separators sprühbeschichtet. Die zweite subnanoporöse Membran ist also das Substrat, das sprühbeschichtet wird.

Optional wird die Kathode anhand eines Infrarotstrahlers erhitzt, so dass die Temperatur der Kathode zwischen 90°C und 110°C, vorzugsweise zwischen 100°C und 110°C, beträgt.

Die mit dem zweiten Separator beschichtete zweite subnanoporöse Membran wird zweckmäßig anschließend auf die erhitzte Kathode aufgebracht, insbesondere aufgelegt, so dass der zweite Separator zwischen der Kathode und der zweiten subnanoporösen Membran angeordnet ist. Bevorzugt wird der zweite Separator und die zweiten subnanoporösen Membran, beispielsweise anhand einer Walze und/oder mit einer Linienlast zwischen 10 kg/mm und 200 kg/mm, insbesondere zwischen100 kg/mm und 200 kg/mm, gegen die Kathode gedrückt. Auf diese Weise wird ein vergleichsweise zuverlässiger Halt des zweiten Separators und der zweiten subnanoporösen Membran an der Kathode realisiert.

Gemäß einer bevorzugten Ausgestaltung ist ein zum ersten Separator und/oder zum zweiten Separator separater, vorzugsweise mikroporöser, dritter Separator zwischen dem ersten Separator und der Kathode, insbesondere zwischen dem ersten Separator und dem zweiten Separator und/oder zwischen der ersten und der zweiten subnanoporösen Membran angeordnet. Der dritte Separator ist beispielsweise ein herkömmlicher Separator. Geeigneter Weise ist der dritte Separator ein mikroporöser Polyolefinseparator, insbesondere ein PP-Separator (Polypropylen-Separator) oder PE-Separator (Polyethylen-Separator).

Der erste Separator und/oder der zweite Separator bewirken bereits eine räumliche und/oder elektrische Separation der Anode und der Kathode. Der dritte Separator dient jedoch als Reservoir für den flüssigen Elektrolyten.

Insbesondere ist der flüssige Elektrolyt lediglich außerhalb der Anode und der Kathode und deren Beschichtungen (erster Separator, zweiter Separator, erste subnanoporöse Membran und/oder zweite subnanoporöse Membran) vorhanden. Mit anderen Worten ist insbesondere lediglich der dritte Separator mit dem flüssigen Elektrolyt getränkt, also ist in der Anode und in der Kathode kein flüssiger Elektrolyt vorhanden.

Besonders bevorzugt sind die Schichtdicken jeder Schicht des ersten Separators und/oder der zweiten Separators und/oder des dritten Separators jeweils konstant.

Ein weiterer Aspekt der Erfindung betrifft eine Batterie, die zumindest eine Batteriezelle in einer der oben dargestellten Varianten aufweist. Die Batterie ist beispielsweise eine Traktionsbatterie (HV-Batterie, Hochvolt-Batterie), die dazu vorgesehen und eingerichtet ist, elektrische Energie für ein Hochvoltnetz eines Kraftfahrzeugs bereitzustellen. Insbesondere ist dabei die von der Traktionsbatterie bereitgestellte (Gleich-)Spannung größer als 60V, vorzugsweise zwischen 200 und 2000V. Allenfalls umfasst die Traktionsbatterie zumindest eine Batteriezelle, die gemäß einer der oben dargestellten Varianten ausgebildet ist. Geeigneter Weise umfasst die Traktionsbatterie mehrere solcher Batteriezellen, die in Serie und/oder parallel zueinander geschaltet sind.

Ein weiterer Aspekt der Erfindung betrifft ein, insbesondere elektrisch angetriebenes, Kraftfahrzeug, welches eine Batteriezelle in einer der oben dargestellten Varianten und/oder die oben dargestellte Batterie aufweist. Zweckmäßig wird ein Traktionsantrieb des Kraftfahrzeugs, insbesondere dessen Traktion-Elektromotor, anhand der Traktionsbatterie mit elektrischer Energie versorgt.

Alternativ zur Verwendung der Batteriezelle für ein Kraftfahrzeug wird die Batteriezelle in einer der oben dargestellten Variante für ein Batterie-Energiespeichersystem (Batteriespeicher) verwendet.

Nachfolgend werden Ausführungsbeispiele der Erfindung anhand einer Zeichnung näher erläutert. Darin zeigen:
- Fig. 1: schematisch ein elektrisch angetriebenes Kraftfahrzeug mit einer Traktionsbatterie, und
- Fig. 2: schematisch eine Batteriezelle der Traktionsbatterie mit einer beschichteten Anode und mit einer beschichteten Kathode,
- Fig. 3: schematisch eine alternative Ausgestaltung der beschichteten Anode, und
- Fig. 4: schematisch eine alternative Ausgestaltung der beschichteten Kathode.

Einander entsprechende Teile und Größen sind in allen Figuren stets mit gleichen Bezugszeichen versehen.

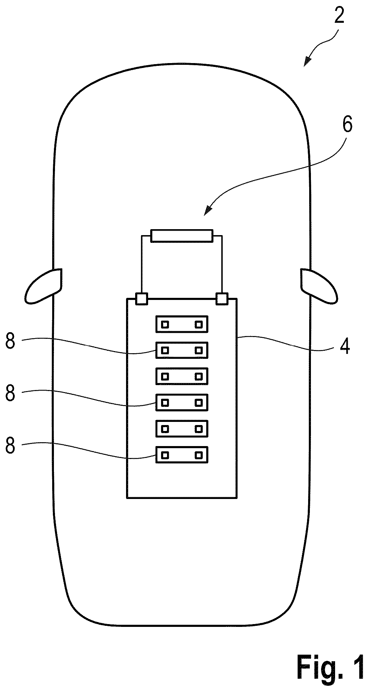

In Fig. 1 ist ein Kraftfahrzeug 2 dargestellt. Das Kraftfahrzeug 2 umfasst eine Batterie 4, welche hier beispielsweise eine Traktionsbatterie 4 (Hochvoltbatterie) des Kraftfahrzeugs 2 ist. Die (Traktions-)Batterie 4 ist also dazu vorgesehen und eingerichtet ist, elektrische Energie für ein Hochvoltnetz des Kraftfahrzeugs 2 und insbesondere für einen Traktionsantrieb 6 bereitzustellen. Hierzu ist das Hochvoltnetz und an die Batterie 4 angeschlossen.

Die Batterie 4 weist eine Anzahl an Batteriezellen 8 auf, von denen zum Zwecke einer besseren Übersichtlichkeit lediglich sechs dargestellt sind. Die Batteriezellen 8 sind in nicht näher dargestellter Weise in Serie und/oder parallel zueinander verschaltet.

Geeigneter Weise sind die Batteriezellen 8 als Natrium-ionen-Batteriezellen, als Magnesium-Ionen-Batteriezellen oder als Lithium-Ionen-Batteriezellen ausgebildet.

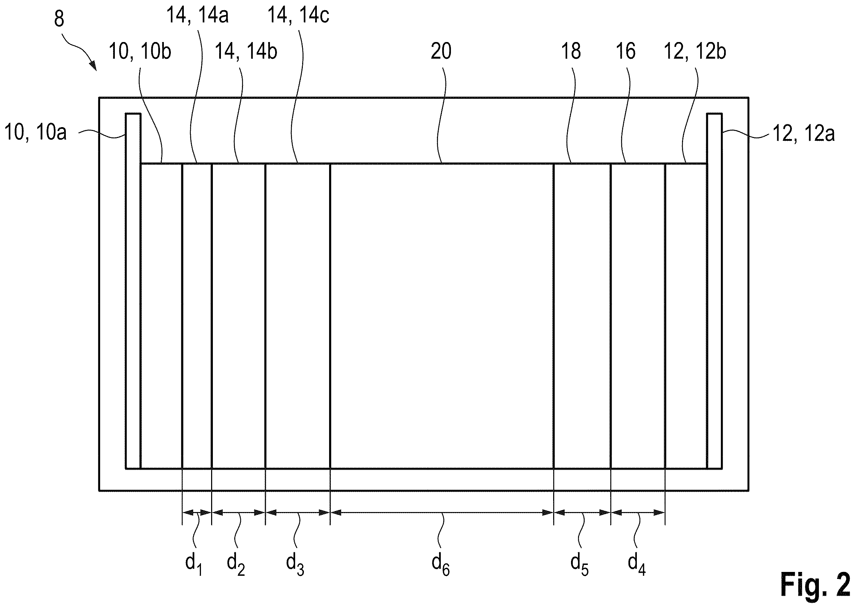

In der Fig. 2 ist schematisch eine der Batteriezellen 8 dargestellt. Diese umfasst eine Anode 10 und eine Kathode 12. Die Anode 10 umfasst ein (Anoden-)Substrat 10a, beispielsweise eine Metallfolie, zweckmäßig eine Kupferfolie, die mit einer Schicht aus Anodenmaterial 10b beschichtet ist. Das Anodenmaterial 10b umfasst zweckmäßig einen Binder, Aktivmaterial und ein Leitadditiv.

Die Kathode 12 umfasst ein (Kathoden-)Substrat 12a, beispielsweise eine Metallfolie, zweckmäßig eine Aluminiumfolie, die mit einer Schicht aus Kathodenmaterial 12b beschichtet ist. Das Kathodenmaterial 12b umfasst zweckmäßig einen Binder, Aktivmaterial und ein Leitadditiv.

Beispielsweise ist die Batteriezelle 8 eine Li-lonen-Batteriezelle, wobei als Aktivmaterial der Kathode 12 beispielsweise Lithium-Nickel-Mangan-Oxid (NMC) und als Aktivmaterial der Anode 10 beispielsweise Graphit verwendet wird.

Weiterhin umfasst die Batteriezelle 8 einen flüssigen Elektrolyt für den Transport von Metallionen. Die Batteriezelle 8 ist dabei mit dem Elektrolyt befüllt. Der Elektrolyt umfasst ein, insbesondere nicht wässriges und/oder organisches Lösungsmittel, in welchem die Metallionen (Metall-Ionen) gelöst sind und/oder lösbar sind. Als Lösungsmittel wird im Falle einer Li-Ionen-Batteriezelle beispielsweise Ethylencarbonat (EC), Propylencarbonat (PC), Dimethylcarbonat (DMC), Methylencarbonat, oder eine Kombination aus diesen Stoffen verwendet, wobei im Lösungsmittel ein Leitsalz, beispielsweise Lithiumhexafluorophosphat, gelöst ist.

Die Anode 10, nämlich deren Anodenmaterial 10b, ist zur Desolvatation von Metallionen vom Lösungsmittel des Elektrolyt mit einem ersten Separator 14 beschichtet. Dieser weist wiederum drei Schichten, nämlich eine erste Schicht 14a, eine zweite Schicht 14b und eine dritte Schicht 14c auf. Dabei ist die erste Schicht 14a direkt an der Kathode, die zweite Schicht 14b auf der ersten Schicht und die dritte Schicht 14c auf der zweiten Schicht 14b angeordnet. Also ist die erste Schicht 14a zwischen der Anode 10 und der zweiten Schicht 14b und die zweite Schicht 14b zwischen der ersten Schicht 14a und der dritten Schicht 14c angeordnet.

Die erste Schicht 14a ist oder umfasst einen Haftvermittler wie beispielsweise Graphenoxid für die zweite Schicht 14b. Die Dicke d₁ (Schichtdicke d₁) der ersten Schicht 14a beträgt zwischen 5 nm und 20 nm, bevorzugt zwischen 10 nm und 20 nm.

Die zweite Schicht 14b ist aus Kronenether gebildet oder umfasst Kronenether. Die zweite Schicht 14b dient dabei der chemischen Desolvatation des Metallions. So dienen Kronenether als Ligand für die Metallionen, was in einer Desolvatation des Metallions resultiert. Ist die Batteriezelle 8 eine Lithium-Ionen-Batteriezelle, so wird als Kronenether beispielsweise 12-Krone-4 oder 15-Krone-5 verwendet. Ist die Batteriezelle 8 eine Mg-lonen-Batteriezelle, so wird als Kronenether bevorzugt 12-Krone-4 oder 15-Krone-5 verwendet. Ist die Batteriezelle 8 eine Natrium-Ionen-Batteriezelle, so wird als Kronenether bevorzugt 15-Krone-5 oder 18-Krone-6 verwendet.

Die Dicke d₂ (Schichtdicke d₂) der zweiten Schicht 14b beträgt zwischen 10 nm und 50 nm, bevorzugt zwischen 25 nm und 45 nm.

Die dritte Schicht 14c des ersten Separators 14 ist eine subnanoporöse Membran 14c (erste subnanoporöse Membran 14c). Die erste subnanoporöse Membran 14c ist also als eine dritte Schicht direkt auf der zweiten Schicht 14b mit und/oder aus Kronenether angeordnet.

Die erste subnanoporöse Membran 14c ist dabei aus Polyethylenglykol gebildet. Die erste subnanoporöse Membran 14c weist eine durchschnittliche Porengröße zwischen 80 pm und 500 pm, insbesondere zwischen 100 pm und 250 pm, auf, wenn die Batteriezelle 8 eine Li-lonen-Batteriezelle ist. Wenn die Batteriezelle 8 eine Na-lonen-Batteriezelle ist, beträgt die durchschnittliche Porengröße zwischen 110 pm und 600 pm, insbesondere zwischen 120 pm und 300 pm. Wenn die Batteriezelle eine Mg-lonen- Batteriezelle ist, beträgt die durchschnittliche Porengröße zwischen 75 pm und 500 pm, insbesondere zwischen 90 pm und 220 pm.

Die Porosität der ersten subnanoporöse Membran 14c beträgt zwischen 35% und 70%, insbesondere zwischen 45% und 65%.

Die Schichtdicke d₃ der ersten subnanoporösen Membran 14c beträgt zwischen 20 nm bis 200 nm, vorzugsweise 30 nm bis 100 nm.

Die Kathode 12, nämlich deren Kathodenmaterial 12b, ist mit einem sauerstofffangenden zweiten Separator 16 beschichtet, wobei die Schichtdicke d₄ des zweiten Separators 16 zwischen 10 nm und 50nm beträgt.

Der zweite Separator 16 umfasst ein Polymer mit einer sauerstofffangenden funktionellen Gruppe, wie beispielsweise einer Hydroxygruppe, einer Aldehydgruppe, einer Aminogruppe oder einer Thiolgruppe. Beispielsweise umfasst der zweite Separator 16 Polyvinylalkohol (PVA), Polyacrylamid (PAM), Polyvinylthiol (PVT), Polyvinylacetaldehyd (PVAld), Poly-3,4-ethylendioxythiophen (PEDOT) und/oder und Poly(styrolsulfonsäure) (PSS) verwendet. Geeigneter Weise ist der zweite Separator 16 ein (Polymer-)Blend mit einem solchen Polymer. Beispielsweise ist dieser Blend ein solcher aus den Polymeren Poly-3,4-ethylendioxythiophen (PEDOT) und Poly(styrolsulfonsäure) (PSS).

Der zweite Separator 16 ist mit einer zweiten subnanoporösen Membran 18 aus Polyethylenglykol beschichtet. Die zweite subnanoporöse Membran 18 weist in analoger Weise zur ersten subnanoporösen Membran 14c eine durchschnittliche Porengröße zwischen 80 pm und 500 pm, insbesondere zwischen 100 pm und 250 pm, auf, wenn die Batteriezelle 8 eine Li-lonen-Batteriezelle ist. Wenn die Batteriezelle 8 eine Na-lonen-Batteriezelle ist, beträgt die durchschnittliche Porengröße der zweiten subnanoporösen Membran 18 zwischen 110 pm und 600 pm, insbesondere zwischen 120 pm und 300 pm. Wenn die Batteriezelle eine Mg-Ionen-Batteriezelle ist, beträgt die durchschnittliche Porengröße der zweiten subnanoporösen Membran 18 zwischen 75 pm und 500 pm, insbesondere zwischen 90 pm und 220 pm.

Die Porosität der zweiten subnanoporöse Membran 18 beträgt zwischen 35% und 70%, insbesondere zwischen 45% und 65%. Die Schichtdicke d₅ der zweiten subnanoporösen Membran 18 beträgt zwischen 20 nm bis 200 nm, vorzugsweise 30 nm bis 100 nm.

Optional weist die Batteriezelle 8 einen dritten Separator 20 auf. Dieser ist ein zum ersten Separator 14, zum zweiten Separator 16, zur Anode 10 und zur Kathode 12, zur ersten und zur zweiten subnanoporösen Membran 14c, 18 separates Teil. Weiterhin ist der dritte Separator 20 zwischen der beschichteten Anode 10 und zwischen der beschichteten Kathode 12 angeordnet. Bei der Ausführung des Batteriezelle 8 gemäß der Fig. 2 ist der dritte Separator 20 also zwischen der ersten subnanoporösen Membran 14c und der zweiten subnanoporösen Membran 18, angeordnet.

Die Dicke d₆ des dritten Separators 20 beträgt beispielsweise zwischen 10 µm und 30 µm. beispielsweise ist der dritte Separator eine aus dem Stand der Technik bekannte mikroporöse Polyolefinfolie, beispielsweise ein mikroporöser Polypropylen-Separator oder ein mikroporöser Polyethylen-Separator. Der dritte Separator 20 ist dabei mit dem Elektrolyt getränkt. Insbesondere ist lediglich der dritte Separator 20 mit dem flüssigen Elektrolyt getränkt.

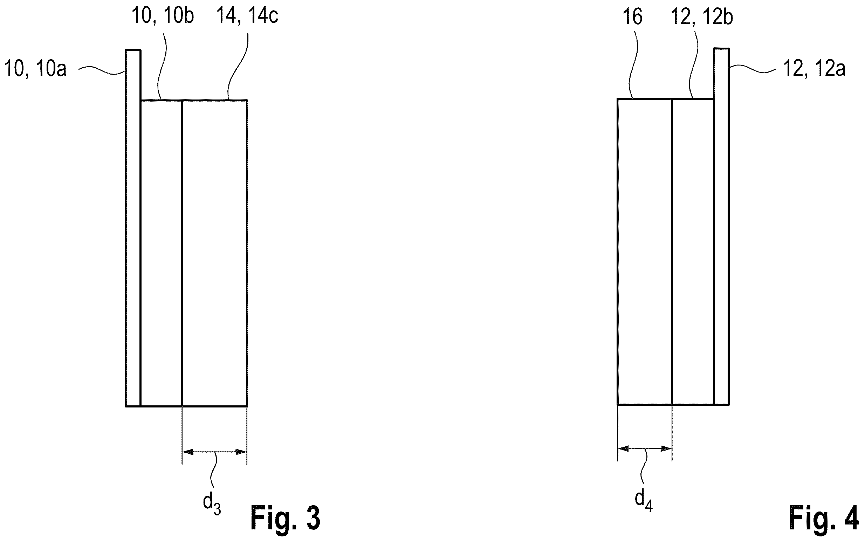

In der Fig. 3 ist eine alternative Ausgestaltung der beschichteten Anode 10 der Batteriezelle 8 dargestellt. Hierbei ist die Anode 10, nämlich deren Anodenmaterial 10b, lediglich mit der ersten subnanoporösen Membran 14c beschichtet. Die Anode 10 ist also nicht mit der ersten und der zweiten Schicht 14a, 14b beschichtet. Der erste Separator 14 umfasst also die erste Schicht 14a und die zweite Schicht 14b nicht. Im Übrigen gelten die Ausführungen zur Batteriezelle 8 gemäß der Figuren 2 und 4 in analoger Weise.

In der Fig. 4 ist eine alternative Ausgestaltung der beschichteten Kathode 12 der Batteriezelle 8 dargestellt. Hierbei ist die Kathode 12, nämlich deren Kathodenmaterial 12b, lediglich mit dem zweiten Separator 16 beschichtet. Der zweite Separator 16 ist also nicht mit der zweite subnanoporöse Membran 18 versehen. Die Batteriezelle 8 umfasst also die zweite subnanoporöse Membran 18 nicht. Im Übrigen gelten die Ausführungen zur Batteriezelle 8 gemäß der Figuren 2 und 3 in analoger Weise.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Batterie
- 6: Traktionsantrieb
- 8: Batteriezelle
- 10: Anode
- 10a: Substrat der Anode
- 10b: Anodenmaterial
- 12: Kathode
- 12a: Substrat der Kathode
- 12b: Kathodenmaterial
- 14: erster Separator
- 14a: erste Schicht des ersten Separators
- 14b: zweite Schicht des ersten Separators
- 14c: dritte Schicht des ersten Separators / erste subnanoporöse Membran
- 16: zweiter Separator
- 18: zweite subnanoporöse Membran
- 20: dritter Separator

- d₁: Schichtdicke der ersten Schicht des ersten Separators
- d₂: Schichtdicke der zweiten Schicht des ersten Separators
- d₃: Schichtdicke der ersten subnanoporösen Membran
- d₄: Dicke des zweiten Separators
- d₅: Dicke der zweiten subnanoporösen Membran
- d₆: Dicke des dritten Separators

## Patentansprüche

1. Metall-Ionen-Batteriezelle (8), insbesondere Li-lonen-Batteriezelle, aufweisend
- eine Anode (10), eine Kathode (12) sowie einen flüssigen Elektrolyt mit einem Lösungsmittel,
- wobei die Anode (10), insbesondere deren Beschichtung mit Aktivmaterial, mit einem ersten Separator (14) zur Desolvatation von Metallionen vom Lösungsmittel beschichtet ist.

2. Metall-Ionen-Batteriezelle (8) nach Anspruch 1,
**dadurch gekennzeichnet,**
- **dass** der erste Separator (14) Kronenether, insbesondere 12-Krone-4, 15-Krone-5 oder 18-Krone-6, zur chemischen Desolvatation des Metallions umfasst oder aus einem solchen besteht, und/oder
- wobei eine Schichtdicke des ersten Separators (14) zwischen 10 nm und 70 nm, insbesondere zwischen 10 nm und 50 nm, vorzugsweise 25 nm und 45 nm beträgt.

3. Metall-Ionen-Batteriezelle (8) nach Anspruch 2,
**dadurch gekennzeichnet,**
**dass** der erste Separator (14) eine erste Schicht (14a) mit einen, insbesondere leitfähigen, Haftvermittler für eine zweite Schicht (14b) umfasst oder aus einem solchen Haftvermittler besteht, wobei die zweite Schicht (14b) den Kronenether umfasst oder aus einem solchen besteht.

4. Metall-Ionen-Batteriezelle (8) nach einem der Ansprüche 1 bis 3,
**dadurch gekennzeichnet,**
- **dass** der erste Separator (14) zur sterisch bedingten Desolvatation des Metallions eine erste subnanoporöse Membran (14c) mit einer durchschnittlichen Porengröße zwischen 50 pm und 700 pm ist oder eine solche subnanoporöse Membran (14c), insbesondere als auf der zweiten Schicht (14b) angeordnete dritte Schicht (L3), aufweist, und/oder
- wobei eine Schichtdicke der subnanoporöse Membran (14c) zwischen 20 nm und 200 nm, insbesondere zwischen 30 nm und 100 nm beträgt.

5. Metall-Ionen-Batteriezelle (8) nach Anspruch 4,
**dadurch gekennzeichnet,**
**dass** die erste subnanoporöse Membran (14c) aus Polyethylenglykol besteht oder Polyethylenglykol aufweist.

6. Metall-Ionen-Batteriezelle (8) nach einem der Ansprüche 1 bis 5,
**dadurch gekennzeichnet,**
- **dass** die Kathode (12), insbesondere deren Beschichtung mit Aktivmaterial, mit einem sauerstofffangenden zweiten Separator (16) beschichtet ist, und/oder
- wobei eine Schichtdicke des zweiten Separators (16) zwischen 10 nm und 50nm beträgt.

7. Metall-Ionen-Batteriezelle (8) nach Anspruch 6,
**dadurch gekennzeichnet,**
**dass** der zweite Separator (SP2) mit einer, insbesondere aus Polyethylenglykol bestehenden oder Polyethylenglykol aufweisenden, zweiten subnanoporösen Membran (18) mit einer durchschnittlichen Porengröße zwischen 50 pm und 700 pm beschichtet ist.

8. Metall-Ionen-Batteriezelle (8) nach einem der Ansprüche 1 bis 7,
**dadurch gekennzeichnet,**
**dass** ein zum ersten Separator (14) und/oder zum zweiten Separator (16) separater dritter Separator (20) zwischen dem ersten Separator (14) und der Kathode (12) , insbesondere zwischen dem ersten Separator (14) und dem zweiten Separator (16), angeordnet ist.

9. Batterie (4), insbesondere Traktionsbatterie für ein Kraftfahrzeug (2), mit einer Batteriezelle (8) nach einem der Ansprüche 1 bis 8.

10. Kraftfahrzeug (2) mit einer Batteriezelle (8) nach einem der Ansprüche 1 bis 8 und/oder mit einer Batterie (4) nach Anspruch 9.
